(19) Europäisches Patentamt

European Patent Office

Office européen des brevets

(11) **EP 4 765 549 A1**

(12) **EUROPEAN PATENT APPLICATION**

(43) Date of publication:
24.06.2026 Bulletin 2026/26

(21) Application number: 24221078.9

(22) Date of filing: 18.12.2024

(51) International Patent Classification (IPC):
$H02J\ 3/38$ (2026.01)   $H02J\ 3/48$ (2026.01)
$H02J\ 3/50$ (2026.01)   $H02J\ 3/18$ (2026.01)

(52) Cooperative Patent Classification (CPC):
H02J 3/381; H02J 3/1842; H02J 3/48; H02J 3/50

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(71) Applicant: Hitachi Energy Ltd
8050 Zürich (CH)

(72) Inventors:
• Svensson, Jan
723 46 Västerås (SE)
• Bongiorno, Massimo
412 61 Göteborg (SE)
• Hasler, Jean-Philippe
722 44 Västerås (SE)

(74) Representative: AWA Sweden AB
Matrosgatan 1
Box 5117
200 71 Malmö (SE)

(54) **CONTROL DEVICE FOR GRID-FORMING CONTROL, POWER SUPPORTING SYSTEM, AND METHOD**

(57) The present disclosure relates to a control device (20) configured for grid-forming control using a voltage source converter, VSC, (10) electrically connected to a power grid (40) via a point-of-common-coupling, PCC, the control device (20) comprising: a decoupling controller (21) configured to determine a VSC virtual electromotive force ($v_{EMF}$) of said VSC (10) based at least on a first complex signal $(K; \gamma, \delta)$, which first complex signal $(K; \gamma, \delta)$ is based at least on a complex power ($S_g$; $P_g$, $Q_g$) being exchanged between said VSC (10) and the power grid (40), and a complex power reference ($S_{ref}$, $P_{ref}$, $Q_{ref}$) for said complex power ($S_g$; $P_g$, $Q_g$), and a current controller (22) configured to determine a VSC voltage reference ($v_{c,ref}$) for said VSC (10) based at least on a grid voltage ($v_g$) for said power grid (40) at said PCC, and a current reference ($i_{f,ref}$) for a current (if) propagating between said VSC (10) and said PCC, a virtual admittance unit (24) configured to determine said current reference ($i_{f,ref}$) based at least on a voltage input ($v_{in}$) multiplied with a virtual admittance ($Y_v$), wherein said voltage input ($v_{in}$) is based at least on a voltage difference between said VSC virtual electromotive force ($v_{EMF}$) and said grid voltage ($v_g$), and said virtual admittance ($Y_v$) is based at least on a virtual impedance between the VSC virtual electromotive force ($v_{EMF}$) and said PCC, wherein the control device (20) is configured to provide said VSC voltage reference ($v_{c,ref}$) to said VSC (10), and wherein said decoupling controller (21) comprises a phase compensation unit (211) configured to apply a phase compensation to said first complex signal $(K; \gamma, \delta)$, which phase compensation is selected to compensate for a phase-shift introduced by said virtual impedance. A method of grid-forming control and a power supporting system is also disclosed.

Fig. 3a

EP 4 765 549 A1

**Description**

Technical Field

The present disclosure relates to a control device for grid-forming control using a voltage source converter, VSC, connected to a power grid, a power supporting system comprising the control device and the VSC, and a method of grid-forming control using the VSC.

Background

Global climate change has prompted action plans to reduce $CO_2$ emissions by phasing out fossil fuels and transitioning to electrified processes. This shift increases electric loads, largely supported by non-dispatchable renewable energy sources like wind and solar, replacing coal and gas power plants. While renewable energy offers environmental benefits, it presents challenges to grid stability due to fundamental differences from traditional power systems.

Traditional power plants use synchronous machines that provide fault currents and stabilize grid frequency through kinetic energy stored in large spinning masses. In contrast, renewable sources rely on power electronic converters, which lack inertia and do not contribute to short-circuit power or frequency stabilization, weakening the grid. To address these issues, Transmission System Operators (TSOs) and Distribution System Operators (DSOs) increasingly require converters to adopt grid-forming control strategies.

However, current grid-forming control strategies face limitations. Conventional current-limiting methods, such as converter tripping functionality, compromise grid-forming capabilities. Additionally, in grid-forming control, a converter's interaction with a power grid is controllable by means of a virtual impedance, having a resistive part (often termed virtual resistance) and a reactive part. The virtual resistance can be selected to dampen oscillations and stabilize how the converter interacts with the power grid, whereas the reactive part can be selected to influence how the converter responds to voltage and current phase shifts. However, a non-negligible resistor will introduce a cross-coupling between the active and reactive power of the converter, which makes it difficult to freely adjust control parameters of the converter.

In view of these challenges, there is a need for improved solutions to overcome the limitations of current grid-forming control strategies.

Summary

It is an object of the present disclosure to provide an improved solution that alleviates at least some drawbacks with present solutions. This and other objects, which will be implicitly and explicitly detailed in the following disclosure, are solved by one or more of the inventions defined in the claims. Additional advantageous embodiments are described in the following.

The present disclosure generally relates to a control device configured to provide a grid-forming control signal at least indicative of a VSC voltage reference to a voltage source converter, VSC, electrically connected or connectable to a power grid via a point-of-common-coupling, PCC. Moreover, the present disclosure generally relates to a control device characterizable by means of a complex transfer function between the control device's input and output, which complex transfer function allows, at least indirectly, a virtual input admittance of the VSC to be treated as a controllable parameter. In other words, the control device may control the VSC based on a selected virtual input admittance of the VSC.

The present disclosure is based on the inventors' realization that such a control device may implement a phase compensation unit configured to apply a phase compensation to compensate for a phase-shift introduced by a selected virtual input impedance of said VSC and any other phase-shift introduced along the electrical connection between the VSC and the PCC. By appropriately selecting the phase compensation, cross-coupling between active power and reactive power may be reduced, preferably eliminated. This allows for active power and reactive power to be more freely controllable independently of one another. Since an adjusted control setting of active power may have a reduced impact on reactive power and vice versa, control of the VSC may be enhanced. Moreover, by such a control device, frequency spectra between input and output of the control device may be preserved. In other words, the frequency content in the input signal may be reflected in the output without additional frequency components.

According to a first aspect of the present disclosure, a control device configured for grid-forming control using a VSC electrically connected to a power grid via a PCC is provided. The control device comprises a decoupling controller. The decoupling controller is configured to determine a VSC virtual electromotive force of said VSC based at least on a first complex signal. The first complex signal is based at least on: a complex power being exchanged between said VSC and the power grid, and a complex power reference for said complex power. The control device comprises a current controller configured to determine a VSC voltage reference for said VSC based at least on: a grid voltage for said power grid at said PCC, and a current reference for a current propagating between said VSC and said PCC. The control device comprises a virtual admittance unit configured to determine said current reference based at least on: a voltage input multiplied with a virtual admittance. The voltage input is based at least on a voltage difference between said VSC virtual electromotive force and said grid voltage, and said virtual admittance is based at least on a virtual impedance between the VSC virtual electromotive force and said PCC. The control device is configured to provide said VSC voltage reference to said VSC. The decoupling controller comprises a phase compensation unit configured to apply a phase compensation to said first complex signal, which phase compensation is selected to compensate for a phase-shift introduced by said virtual impedance.

As explained above, by appropriately selecting the phase compensation, cross-coupling between active power and reactive power may be reduced, preferably eliminated. This allows for active power and reactive power to be more freely controllable independently of one another. As an adjusted control setting of active power may have a reduced impact on reactive power and vice versa, control of the VSC may be enhanced.

Moreover, due to the enhanced control of the VSC the control device according to the present disclosure enables, there is less risk of power overshoots, which effectively results in less risk of current overshoots. Thus, the control device advantageously reduces the need to implement any specific current limitation methods to protect sensitive components of the VSC. However, the control device may implement specific current limitation means to provide additional current limitation safeguards, such as a current limitation unit configured to limit current propagating between the VSC and the PCC.

The decoupling controller may be referred to as such due to its function of enabling, at least via the phase compensation unit, decoupling of active power and reactive power, or at least reduce a cross-coupling of active power and reactive power. The decoupling controller, due to its function of receiving and processing the complex power and complex power reference, may alternatively be referred to as a complex power controller or a complex power control unit.

The current controller may be referred to as such due to its function of controlling current, at least indirectly via the VSC voltage reference. The current controller may control the current indirectly via the VSC voltage reference, either with closed-loop control or open-loop control.

The decoupling controller is configured to determine a VSC virtual electromotive force of the VSC. Although called "force," electromotive force, EMF, generally refers to a potential difference, not a traditional natural or mechanical force. The EMF may be measured by means of a measurement device connected between terminals of the VSC of a respective phase. In a VSC configured for three-phase application, an EMF may be characterized per each phase of the three phases.

The first complex signal is based at least on: a complex power being exchanged between the VSC and the power grid, and a complex power reference for said complex power. The complex power may refer to a complex power being exchanged between said VSC and the power grid during steady-state operation or during transient operation. It may be said that complex power generally comprises an active (real) power component and a reactive (stored) power component.

The current controller is configured to determine a VSC voltage reference based at least on: the grid voltage, and the current reference. Anyone of, or all of, the grid voltage, the current, and the current reference may indicate a respective parameter during steady-state operation or during transient operation. The current controller may be configured to determine the VSC voltage reference based on at least one of: the grid voltage, the current propagating between said VSC and said PCC, and the current reference for said current. Taking also into account the current propagating between said VSC and said PCC, the current controller may be configured with closed-loop control of said current rather than with open-loop control.

The control device is configured to provide the VSC voltage reference to the VSC. The VSC voltage reference may alternatively be referred to as a grid-forming control signal. The grid-forming control signal may directly specify the VSC voltage reference or indicate the VSC voltage reference. In either case, the grid-forming control signal is at least indicative of the VSC voltage reference.

The control device may be configured to use a complex power as a controlled quantity. The control device may be configured to regulate or maintain the controlled quantity at a desired value or within a specific range. The control device may be configured to use other parameters as a controlled quantity, such as voltage, current, or frequency. The control device may be configured to use any combination of the above as controlled quantities.

The control device is configured to control the VSC electrically connected to the power grid via the PCC. The VSC may be a VSC for a three-phase system. In a three-phase system, the VSC has at least three terminals, or at least three pairs of terminals, one terminal or one pair of terminals for each phase, and each terminal has its respective voltage, current, and input admittance. However, the control device is not as such limited to grid-forming control of grid-connected devices designed for three-phase systems, but may be used for grid-connected devices designed for any number of phases. As a non-limiting example, the control device may be configured to control at least one VSC, wherein each VSC of said at least one VSC is electrically connected to a respective phase of the power grid. As a non-limiting example, the control device may be configured to control a plurality of VSCs individually, wherein each VSC is electrically connected to the same phase of the power grid.

The control device enables grid-forming control of a VSC. Grid-forming control may refer to a method of controlling grid-connected devices, such as a VSC, so that they behave like a voltage source behind a pre-defined impedance, providing stable voltage and frequency to the grid. A grid-forming device may refer to a grid-connected device controlled by means of grid-forming control. A grid-forming control device according to the present disclosure may control a grid-connected device, such as a VSC, to behave as a grid-forming device. Grid-forming devices emulate a synchronous generator by controlling the voltage magnitude and phase at their terminals. Grid-forming devices may establish voltage and frequency in an islanded grid, making them essential for restarting grids after a blackout (black-start capability). Grid-forming control may be particularly effective in weak or islanded grids, where the absence of strong voltage and frequency references would otherwise lead to instability.

In contrast to grid-forming control, there is grid-following control, wherein a grid-connected device, such as a VSC, synchronizes with an existing power grid. The grid-connected device (the grid-following device) acts as a current source and relies on the power grid to provide a stable voltage and frequency reference. In e.g., situations of a weak power grid, meaning it cannot provide a stable voltage and/or frequency reference, grid-forming control strategies are preferred.

The control device may be configured to generate a grid-forming control signal (at least indicative of a VSC voltage reference) to the VSC. The grid-forming control signal may indicate a sinusoidal voltage waveform with a defined magnitude and frequency. The sinusoidal voltage waveform may serve as a reference for other grid-connected devices electrically connected to the same power grid. The sinusoidal voltage waveform may ensure stable operation even in the absence of external grid signals, such as in islanded mode or during black start conditions.

The control device may be configured to actively generate the grid-forming control signal. The control device may be configurable between an active mode of operation and an inactive mode of operation or a passive mode of operation. The control device may be configured to actively generate the grid-forming control signal during said active mode of operation. The control device may be configured to be OFF during said inactive mode of operation. The control device may be configured to not generate the grid-forming control signal during said passive mode of operation yet remain ON to perform other functions, such as to monitor performance of the grid-connected device. The grid-forming control device may be configured to switch to said active mode of operation based on a performance of the grid-connected device.

The control device may be configured to adjust the grid-forming control signal to control the VSC to simulate an inertial response of traditional rotating generators, providing frequency stability by absorbing or injecting power to counteract frequency fluctuations. In islanded mode, the grid-formed VSC may support a stable grid environment, independently managing the voltage and frequency of the local system. When connected to the power grid, the VSC synchronizes with the power grid voltage and can support grid stability by adjusting its power output as needed, such as during load changes or faults.

According to one embodiment, the decoupling controller comprises an active power loop configured to determine a real part $\gamma$ of the first complex signal K and a reactive power loop configured to determine an imaginary part $\delta$ of the first complex signal K. An underlined parameter may refer to a complex parameter, having a real part and an imaginary part. The complex parameter may be referred to as a vector in a complex plane with real and imaginary axes. The active power loop may be configured to regulate active power relative an active power reference. The reactive power loop may be configured to regulate reactive power relative a reactive power reference. The decoupling controller may process active power and reactive power separately in the respective active power loop and the reactive power loop. This facilitates individual control of active power and reactive power, thereby allowing enhanced control of the VSC.

According to one embodiment, said phase compensation unit is configured to: receive the first complex signal K; apply said phase compensation to said first complex signal K, and determine a second complex signal $\underline{\xi}$ based at least on said phase compensation and said first complex signal, wherein the VSC voltage reference is at least based on said second complex signal $\underline{\xi}$. The second complex signal f has a real part $\eta$ and an imaginary part $\theta$. The VSC virtual electromotive force $\underline{v}_{EMF}$ may then be based on the second complex signal $\underline{\xi}$. In such a case, the VSC virtual electromotive force $\underline{v}_{EMF}$ is nonetheless based on the first complex signal K, since the second complex signal £ is based on the first complex signal K. The phase compensation unit may be configured to determine or select the phase compensation based on a phase-shift introduced by the virtual impedance.

According to one embodiment, the decoupling controller is configured to determine the VSC virtual electromotive force as:

$$\underline{v}_{EMF} = e^{\eta + j\,(\theta + \theta_b)}$$

wherein $\theta_b$ is a ramp angle which increases with time, with a slope equal to a rated frequency of the power grid (e.g., 50 Hz or 60 Hz), $\eta$ is the real part of the second complex signal $\underline{\xi}$, and $\theta$ is the imaginary part of the second complex signal $\underline{\xi}$. The ramp angle $\theta_b$ acts as a reference phase against which the VSC may be controlled, thereby facilitating synchronization between the VSC and the power grid.

According to one embodiment, the phase compensation comprises applying a dynamic phase-shift using a frequency-dependent transfer function of the virtual adm ittance:

$$Y_v(s) = \frac{1}{sL_v + j\omega L_v + R_v}$$

wherein $L_v$ denotes the inductive part of the virtual admittance and $R_v$ denotes the resistive part of the virtual admittance.

The above transfer function may be applied to the first complex signal K to yield a first complex signal derivative. The appropriate phase compensation may then be determined based on a phase indicated by the first complex signal derivative. The second complex signal $\underline{\xi}$ may then be determined based on a magnitude of the first complex signal K and the phase indicated by the first complex signal derivative. By this, the phase compensation is based on the virtual admittance, which then facilitates decoupling control of active power and reactive power, or at least reduces a cross-coupling between active power and reactive power.

According to one embodiment, said voltage input is further based on subtracting a damping voltage $v_{damp}$ from said voltage difference, wherein said damping voltage $v_{damp}$ is provided based on a feedback of the current reference passed through a high-pass filter. The high-pass filter may be applied to the current reference in a dq-coordinate system. This may effectively reduce the output current gain at zero Hz (corresponding to 50 or 60 Hz in a rotating dq-coordinate system, for a 50 or 60 Hz grid, respectively). Advantageously, by implementing said damping voltage, the virtual resistance can be freely selected to suppress any oscillations without also introducing a voltage gain in the VSC voltage reference around the fundamental frequency (rated frequency).

According to one embodiment, the control device is configured so that said damping voltage ($v_{damp}$) is calculated as

$$v_{\mathrm{damp}} = v'_{\mathrm{damp}}\, e^{j\,(\theta+\theta_b)}$$

and said $v'_{\mathrm{damp}}$ is calculated as

$$v'_{\mathrm{damp}} = K_D\, \frac{s}{s + \alpha_{HP}}\, i_{\mathrm{f,ref}} e^{-j\,(\theta+\theta_b)}$$

wherein $K_D$ is a gain during steady state operation and $\alpha_{HP}$ is the cutoff frequency of the high-pass filter.

According to one embodiment, the control device comprises a current limiting unit configured to apply a current limitation to prevent the VSC from being operated above a maximum allowed current threshold. This may further facilitate current limitation of the VSC, thereby protecting sensitive power electronics of the VSC without resorting to tripping functionality that may compromise the VSC's grid-forming capability. As a non-limiting example, the maximum allowed current threshold may be specified by a current limit reference, $I_{f,lim}$. The current limiting unit may be configured to receive said current reference and provide a processed current reference to the current controller. The processed current reference may be the unadjusted current reference or an adjusted current reference based on the current limit reference.

According to one embodiment, the current controller is configurable between an active mode and a passive mode, in the active mode, the current output of the converter is controlled in closed loop, and in passive mode, the current output of the converter is controlled in open loop.

Current output of the converter may refer to current that the converter VSC is controlled to output for a determined VSC voltage reference. Further, closed-loop may refer to a control action of a control entity being dependent on the output. Further, open-loop may refer to a control action of a control entity being independent on the output. In other words, in closed loop, a control action of the current output of the VSC depends on the current output. In other words, in open loop, a control action of the current output of the VSC is independent with respect to the current output.

The current controller may be configured to determine the VSC voltage reference at least based on grid voltage and current reference, as follows. The voltage drop over the virtual impedance is the voltage difference between the VSC voltage reference and the grid voltage. This voltage drop over the virtual impedance is based on the determined current reference multiplied with the virtual impedance. As the voltage drop and the grid voltage are known, then the current controller determines the VSC voltage reference accordingly.

When open-loop control is implemented (e.g., during normal operation), the VSC voltage reference may be calculated as

$$\underline{v}_{\mathrm{c,ref}} = (Z_{\mathrm{f}} \cdot Y_v) \cdot (\underline{v}_{\mathrm{EMF}} - \underline{v}_{\mathrm{g}})$$

wherein $Z_{\mathrm{f}}$ is the filter impedance, which may be calculated as

$$Z_f = R_f + sL_f$$

wherein $R_f$ is the filter resistance and $L_f$ is the filter inductance.

If the current is used as input (closed-loop control), the voltage drop over the virtual impedance is based at least on the error-corrected current reference. As the voltage drop and the grid voltage are known, then the current controller may determine the VSC voltage reference accordingly.

When closed-loop control is implemented (e.g., during a fault condition), the VSC voltage reference in an $\alpha\beta$-coordinate system may be calculated as

$$\underline{v}_{c,ref} = \underline{v}_g + L_f \cdot \frac{d}{dt}\underline{i}_{f,ref} + PR(s) \cdot (\underline{i}_{f,ref} - \underline{i}_f)$$

wherein $\frac{d}{dt}\underline{i}_{f,ref}$ is the time derivative of the reference current, $\underline{i}_f$ is the current, and *PR(s)* is a transfer function of a proportional-resonant controller given by the following formula

$$PR(s) = K_P + \frac{K_r \cdot s}{s^2 + \omega_0^2}$$

wherein $K_P$ is the proportional gain, $K_r$ is the resonant gain, and $\omega_0$ is the resonant frequency, typically $2\pi f$, where *f* is the fundamental frequency (e.g., 50 Hz or 60 Hz).

Implementing a proportional gain may provide a faster response. The proportional gain may however be omitted. This results in a purely resonant controller, in which case the controller focuses solely on eliminating steady-state errors for signals at the resonance frequency.

The proportional-resonant controller may be used when the VSC voltage reference is determined in an $\alpha\beta$-coordinate system. If it is desired to calculate the VSC voltage reference in a dq-coordinate system, the proportional-resonant controller may be replaced by a proportional-integral controller having a transfer function $C_I(s)$ given by the following formula

$$C_I(s) = K_P + \frac{K_i}{s}$$

wherein $K_P$ is the proportional gain and $K_i$ is the integral gain. The proportional gain may be omitted (resulting in an integral controller).

Thus, when closed-loop control is implemented (e.g., during a fault condition), the VSC voltage reference in a dq-coordinate system may be calculated as:

$$\underline{v}_{c,ref} = \underline{v}_g + L_f \cdot \frac{d}{dt}\underline{i}_{f,ref} + C_I(s) \cdot (\underline{i}_{f,ref} - \underline{i}_f).$$

According to one embodiment, the control device is configured to receive the complex power and/or the complex power reference from a system operator or from at least one auxiliary control device. Each of the at least one auxiliary control device may be configured to monitor a respective parameter, such as active power, reactive power, total power, frequency, voltage, current, etc. Each of the at least one auxiliary control device may be configured to provide the respective parameter to the control device.

According to one embodiment, the virtual impedance comprises the virtual input impedance of the VSC in series with a filter impedance of a filter reactor connected between the VSC and the PCC. More specifically, a filter reactor may be electrically connected between a respective terminal of the VSC and the PCC. In other words, a filter reactor may be connected between the VSC and the PCC in each phase.

According to one embodiment, the control device is configured to process said complex power and/or said complex power reference, or any derivatives thereof, and/or any other inputs, in scalar form or in complex form or in a mix of scalar and complex forms. Thus, the control device is advantageously flexible with regards to implementation.

According to one embodiment, the control device is configured to be implemented in scalar form or in a complex form or in a mix of scalar and complex form.

According to one embodiment, the control device is configured to process at least one parameter in a fixed $\alpha\beta$-

6

coordinate system and/or process at least one parameter in a rotating dq-coordinate system.

The control device may be configured in a fixed αβ-coordinate system. The αβ-coordinate system, also called a stationary reference frame, is a two-axis system used to represent AC signals as time-invariant vectors in a plane, wherein α represents the real-axis component and β is the orthogonal imaginary-axis component. A "fixed" αβ-coordinate system implies that the two axes do not rotate with the grid frequency but remain stationary relative to the grid. A transformation from a three-phase coordinate system (a, b, c) to the αβ-coordinate system may be provided using a Clarke transformation.

The control device may be configured in a dq-coordinate system. Unlike the αβ-coordinate system, which is stationary, the dq-coordinate system rotates with the frequency of the AC signal (i.e., it rotates at the same speed as the grid frequency or the system's operating frequency), wherein d represents the active power component in phase with the rotating reference (or grid voltage), and q represents the orthogonal reactive power component. A transformation from the αβ-coordinate system to the dq-coordinate system (rotating) may be provided using a Park transformation.

According to one embodiment, the control device is configured to implement droop control. Droop control may refer to power output being regulated inversely proportional to a change in frequency, a characteristic that is sometimes referred to as "droop characteristic".

When a power grid frequency deviates (e.g., due to an imbalance between generation and load), a VSC may increase or decrease its power output proportionally to stabilize the frequency:

$$X = X_0 - K_f \cdot (f - f_0)$$

wherein $X$ and $X_0$ denotes power output (active P or reactive Q) and power output reference (active $P_0$ or reactive $Q_0$), $K_f$ denotes a VSC's droop coefficient, $f$ is a measured grid frequency of the power grid, and $f_0$ is a grid frequency reference or the nominal grid frequency (e.g., 50 Hz or 60 Hz).

The control device may be configured to implement active power droop control so that active power output is regulated inversely proportional to a change in frequency. The control device may be configured to implement reactive power droop control so that reactive power output is regulated inversely proportional to a change in frequency. In systems with multiple grid-forming VSCs, droop control may ensure proportional sharing of active and reactive power among the VSCs based on their power ratings and droop coefficients.

According to a second aspect, a power supporting system is provided. The power supporting system comprises: a voltage source converter, VSC, configured to be electrically connectable to a power grid at a point-of-common-coupling, PCC, and a control device according to the first aspect or any embodiments thereof. The power supporting system may comprise a plurality of VSC. The control device may be configured to control the plurality of VSC individually. A VSC may be electrically connected or connectable to a renewable energy source, such as a solar farm or a wind farm (onshore or offshore).

According to a third aspect, a method of grid-forming control using a voltage source converter, VSC, electrically connected to a power grid via a point-of-common-coupling, PCC, is provided. The method comprises determining a VSC virtual electromotive force of said VSC based at least one a first complex signal, which first complex signal is based at least on a complex power being exchanged between said VSC and the power grid during steady-state operation, and a complex power reference for said complex power. The method comprises determining a VSC voltage reference for said VSC based at least on: a grid voltage for said power grid at said PCC, and a current reference for a current propagating between said VSC and said PCC. The method comprises determining said current reference based at least on a voltage input multiplied with a virtual admittance, wherein said voltage input is based at least on a voltage difference between said VSC virtual electromotive force and said grid voltage, and said virtual admittance is based at least on a virtual impedance between the VSC virtual electromotive force and said PCC. The method comprises applying a phase compensation to the first complex signal, which phase compensation is selected to compensate for a phase-shift introduced by said virtual impedance. The method comprises providing said VSC voltage reference to said VSC.

According to a fourth aspect, a computer program is provided. The computer program comprises instructions which, when the program is executed by a computer, cause the computer to carry out the method according to the third aspect or any embodiments thereof.

According to a fifth aspect, a computer-readable storage medium is provided. The computer-readable storage medium comprises instructions which, when executed by a computer, cause the computer to carry out the method according to the third aspect or any embodiments thereof.

Effects and features of the second and third and fourth and fifth aspects are largely analogous to those described above in connection with the first aspect. Embodiments mentioned in relation to the first aspect are largely compatible with the second and third and fourth and fifth aspects. It is further noted that the inventive concepts relate to all possible combinations of features unless explicitly stated otherwise.

The invention is defined by the appended independent claims, with embodiments being set forth in the appended dependent claims, in the following description and in the drawings. It is to be understood that this disclosure is not limited to the particular component parts of the device described or steps of the methods described as such device and method may vary. It is also to be understood that the terminology used herein is for purpose of describing particular embodiments only, and is not intended to be limiting. It must be noted that, as used in the specification and the appended claims, the articles "a", "an", "the", and "said" are intended to mean that there are one or more of the elements unless the context clearly dictates otherwise. Thus, for example, reference to "a unit" or "the unit" may include several devices, and the like. Furthermore, the words "comprising", "including", "containing" and similar wordings do not exclude other elements or steps.

Generally, all terms used in the claims are to be interpreted according to their ordinary meaning in the technical field, unless explicitly defined otherwise herein. All references to "a/an/the [element, device, component, means, step, etc.]" are to be interpreted openly as referring to at least one instance of said element, device, component, means, step, etc., unless explicitly stated otherwise.

Brief Description of the Drawings

The invention will in the following be described in more detail with reference to the enclosed drawings, wherein:

Figs. 1a-1e schematically illustrate power supporting systems according to embodiments of the disclosure;
Fig. 2a illustrates a single-line diagram of a power supporting system according to an embodiment;
Figs. 2b-2c schematically illustrate a power supporting system according to some embodiments;
Figs. 3a-3b schematically illustrate a control device according to some embodiments;
Figs. 4a-4b schematically illustrate a control device according to some embodiments;
Figs. 5a-5b schematically illustrate of a portion of the control device according to some embodiments;
Fig. 6 schematically illustrates a portion of the control device according to an embodiment;
Figs. 7a-7c schematically illustrate a module for virtual impedance phase compensation of the control device according to some embodiments;
Fig. 8 illustrates various bode diagrams of a control device according to an embodiment;
Fig. 9 illustrates various bode diagrams of a control device according to an embodiment;
Figs. 10a-10b schematically illustrate a portion of the control device according to some embodiments;
Fig. 11 illustrates impact of an offset active damping in VSC's input admittance components according to an embodiment, and
Fig. 12 illustrates a flow chart of a method of grid-forming control using a VSC according to an embodiment.

Description of Embodiments

Hereinafter, the principle of the present disclosure will be described with reference to illustrative embodiments. It should be understood that all these embodiments are given merely for the person skilled in the art to better understand and further practice the present disclosure, but not for limiting the scope of the present disclosure. For example, features illustrated or described as part of one embodiment may be used with another embodiment to yield still a further embodiment. In the interest of clarity, not all features of an actual implementation are described in this specification. It will of course be appreciated that in the development of any such actual embodiment, numerous implementation-specific decisions should be made to achieve the developers' specific goals, such as compliance with system-related and business-related constraints, which will vary from one implementation to another. Moreover, it will be appreciated that such a development effort might be complex and time-consuming but would nevertheless be a routine undertaking for those of ordinary skill in the art having the benefit of this disclosure.

The disclosed subject matter will now be described with reference to the attached drawings. Various structures, systems and devices are schematically depicted in the drawings for purposes of explanation only and so as to not obscure the description with details that are well known to those skilled in the art. Nevertheless, the attached drawings are included to describe and explain illustrative examples of the disclosed subject matter. The words and phrases used herein should be understood and interpreted to have a meaning consistent with the understanding of those words and phrases by those skilled in the relevant art. No special definition of a term or phrase, i.e., a definition that is different from the ordinary and customary meaning as understood by those skilled in the art, is intended to be implied by consistent usage of the term or phrase herein. To the extent that a term or phrase is intended to have a special meaning, i.e., a meaning other than that understood by skilled artisans, such a special definition will be expressly set forth in the specification in a definitional manner that directly and unequivocally provides the special definition for the term or phrase.

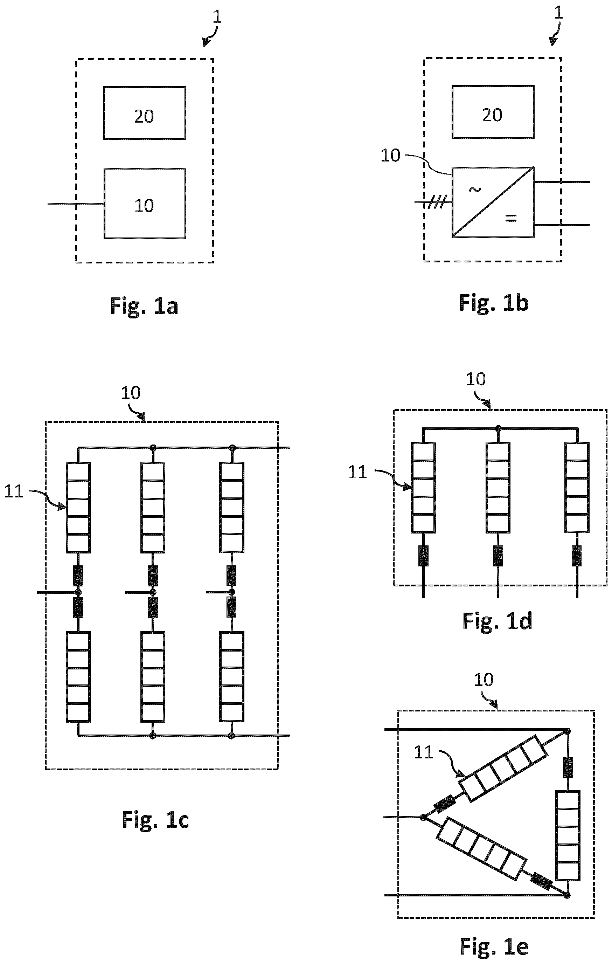

Figs. 1a-1e schematically illustrate power supporting systems or components thereof according to embodiments of the disclosure. The control device 20 according to any embodiment of the present disclosure may be used to control a grid-connected device 10, such as a VSC, electrically connected or electrically connectable to a power grid. The VSC 10 and the control device 20 may together be comprised in a power supporting system 1 for supporting a power grid in terms of complex power (active and/or reactive power), frequency, voltage, current, etc. as needed. However, the control device 20 according to the present disclosure is not as such limited with respect to the VSC 10 it is configured to control. For instance, the VSC 10 may be adapted as a monolithic VSC (see Fig. 1b) or as a multi-level converter, MMC, based VSC (see Figs. 1c-1e). A monolithic VSC may refer to a VSC implementing a single integrated unit with a centralized design with a few large semiconductor devices (e.g., IGBTs or MOSFETs) to handle high voltages and currents. A MMC-based VSC may refer to a VSC that implements a modular architecture, where the VSC is composed of multiple submodules arranged in series in each phase leg. The MMC-based VSC 10 may be designed as a YY-MMC VSC (see Fig. 1c), a Y-connected chain-link VSC (see Fig. 1d), or a D-connected chain-link VSC (see Fig. 1e).

For high-voltage direct current applications, a MMC-based VSC may be preferred. As seen in Figs. 1c-1e, the MMC-based VSC 10 may comprise cells 11 arranged in respective arms as a plurality of series-connected cells 11, the number of arms being dependent on the number of phases of the power grid. As a non-limiting example, the VSC 10 may comprise three arms, each arm corresponding to a respective phase, each arm comprising a plurality of series-connected cells 11. The cells 11 of an arm of the VSC 10 may however be arranged as a plurality of series- and parallel connected cells 11. The power supporting system 1 is electrically connected or electrically connectable to a power grid. Each cell of the VSC 10 may be configured to store and provide energy depending on how the VSC is operated.

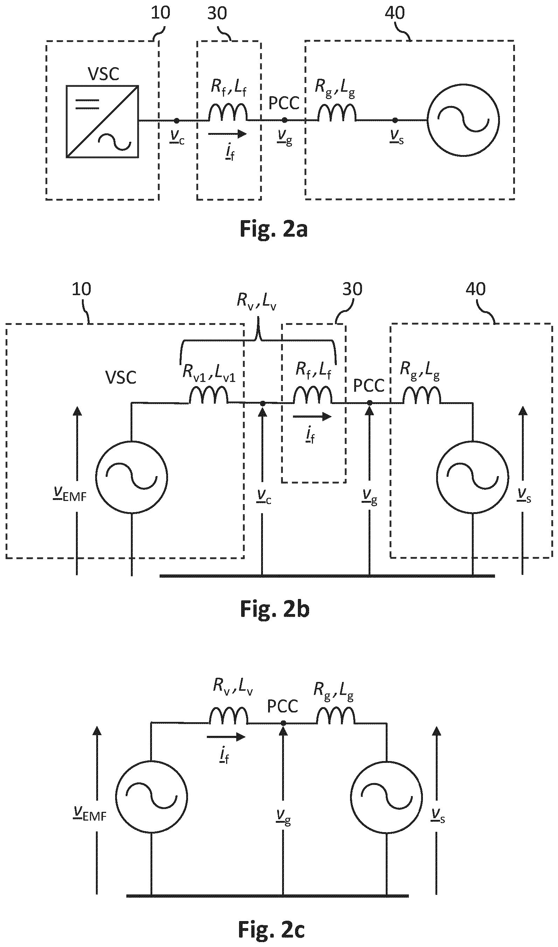

Fig. 2a illustrates a single-line diagram of a power supporting system 1 according to an embodiment. Fig. 2a may depict the power supporting system 1 schematically per phase. The VSC 10 and the power grid 40 are electrically connected or electrically connectable via a point of common connection, PCC. Moreover, a VSC 10 may be electrically connected or electrically connectable with a power grid 40 at the PCC via a filter reactor 30. The VSC 10 is electrically connected or electrically connectable to the filter reactor 30. The filter reactor 30 is electrically connected or electrically connectable to the PCC. In Fig. 2a, the power grid 40 is modelled as a Thevenin equivalent with an impedance ($L_g$, $R_g$) in series with a voltage source providing a source voltage ($\underline{v}_s$). It should however be understood that the power grid may comprise a number of impedances and voltage sources. Further, the filter reactor 30 is modelled with a filter impedance (Lf, Rf). Likewise, it should be understood that the filter reactor 30 may comprise a number of impedances arranged in parallel and/or in series.

In Fig. 2a, and elsewhere, some parameters are underlined. In the following description, an underlined parameter indicates that the parameter is a complex parameter having a real part and an imaginary part. Generally, complex numbers are widely used in high-voltage direct current (HVDC) systems and other power systems primarily for their ability to represent sinusoidal quantities (such as voltages and currents) in a compact and efficient way. In particular, the VSC voltage, $\underline{v}_c$, the power grid voltage $\underline{v}_g$, and the source voltage $\underline{v}_s$ may be denoted as complex parameters.

The VSC voltage, $\underline{v}_c$, may be the voltage measured between the terminals of the VSC 10 of a respective phase or the voltage measured at one terminal of the VSC 10 of a respective phase relative to a reference potential (e.g., ground potential). The power grid voltage $\underline{v}_g$, may be the voltage measured relative to a reference potential (e.g., ground potential). During a power exchange between the VSC and the power grid 40, a current $i_f$ may propagate between the VSC 10 and the power grid 40, e.g., through the filter reactor 30. Fig. 2b schematically illustrates a power supporting system according to an embodiment. Like the power grid 40, the VSC 10 may also be modelled as a Thevenin equivalent with an impedance ($L_{v1}$, $R_{v1}$) in series with a voltage source providing an electromotive force ($\underline{v}_{EMF}$), i.e., a virtual-back EMF. Likewise, it should be understood that the VSC 10 may comprise a number of impedances arranged in parallel and/or in series.

The control device 20 illustrated, e.g., in Fig. 1a is configured to control the VSC 10 according to a grid-forming, GFM, control strategy, where the virtual impedance ($L_v$, $R_v$) between the PCC and the virtual voltage source of the VSC is used as a controllable parameter. The virtual impedance ($L_v$, $R_v$) comprises the physical impedance (Lf, $R_f$) of the physical filter reactor and the virtual input impedance ($L_{v1}$, $R_{v1}$) of the VSC 10, see Fig. 2b and Fig. 2c. As the physical filter reactor comprises a physical impedance, which is not a controllable parameter, the virtual impedance may be controllable by varying the virtual input impedance of the VSC 10.

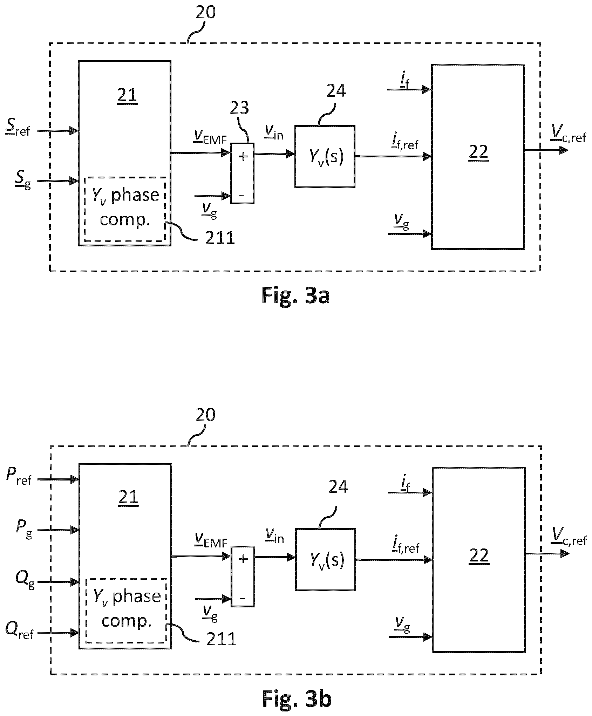

Figs. 3a-3b schematically illustrate a control device 20 according to some embodiments. The control device 20 comprises a decoupling controller 21. The control device 20 comprises a current controller 22. The control device 20 comprises a virtual admittance unit 24. The decoupling controller 21 comprises a phase compensation unit 211. The control device 20 may comprise other components which will be discussed in the following.

The decoupling controller 21 may be configured to determine the VSC virtual electromotive force $\underline{v}_{EMF}$ based on decoupling controller input. The decoupling controller input may comprise a first decoupling controller input indicative of a complex power, $\underline{S}_g$ ($= P_g + jQ_g$), being exchanged between the VSC 10 and the power grid 40, and a second decoupling controller input indicative of a reference complex power, $\underline{S}_{g,ref}$ ($= P_{g,ref} + jQ_{g,ref}$) to be exchanged between the VSC 10 and the power grid 40. Each parameter may be during steady state operation or during transient operation. As illustrated in Fig. 3a, the first decoupling controller input may be provided as a complex parameter, i.e., as $\underline{S}_g$, $\underline{S}_{g,ref}$. Alternatively, as illustrated in Fig. 3b, the first decoupling controller input may be provided as scalars, i.e., as $P_g$, $Q_g$, $P_{g,ref}$, $Q_{g,ref}$. Although not shown, the decoupling controller 21 may be configured to receive and/or process a mix thereof, e.g., receive the complex power as a complex parameter $\underline{S}_q$ and receive the complex power reference as scalars $P_{g,ref}$, $Q_{g,ref}$, or vice versa.

The current controller 22 is configured to determine a VSC voltage reference $\underline{v}_{c,ref}$ for the VSC 10 based on current controller input. The current controller input comprises a first current controller input indicative of a grid voltage $\underline{v}_g$ for the power grid, a second current controller input indicative of a current $i_f$ propagating between the VSC 10 and the PCC, and a third current controller input indicative of a current reference $\underline{i}_{f,ref}$ for said current. As the current propagates through the filter reactor 30 (per phase), the current $i_f$ and the current reference $i_{f,ref}$ may be referred to as filter current $i_f$ and filter current reference $i_{f,ref}$.

The control device 20 comprises a virtual admittance unit 24. The virtual admittance unit 24 is configured to determine the current reference $\underline{i}_{f,ref}$ based at least on a voltage input $\underline{v}_{in}$ multiplied with a virtual admittance $Y_v$. The voltage input $\underline{v}_{in}$ is based at least on: a voltage difference between said VSC virtual electromotive force $\underline{v}_{EMF}$ and said grid voltage $\underline{v}_g$. The virtual admittance $Y_v$ is based at least on a virtual impedance $R_v$, $L_v$ between the VSC virtual electromotive force $\underline{v}_{EMF}$ and the PCC (as shown in e.g., Fig 2c). Considering the filter reactor 30, this may be equivalent to the virtual input impedance $L_{v1}$, $R_{v1}$ of the VSC in series with the filter impedance Lf, Rf of the filter reactor 30.

The control device 20 may be logically configured in various ways in order to determine the VSC voltage reference based on complex power input. According to one non-limiting example, as illustrated in Fig. 3a, the control device 20 may comprise a subtractor 23 configured to determine a difference between at least a first positive input (denoted as "+"), and at least a first negative input (denoted as "-"). The subtractor 23 may be configured to receive the VSC virtual electromotive force $\underline{v}_{EMF}$ as positive input. The subtractor 23 may be configured to receive the grid voltage $\underline{v}_g$ as a negative input. The subtractor 23 is configured to output a voltage difference to the virtual admittance unit 24 as said voltage input $\underline{v}_{in}$. The voltage difference between said VSC virtual electromotive force $\underline{v}_{EMF}$ and said reference grid voltage $\underline{v}_g$ provides the voltage drop over the virtual impedance ($L_v$, $R_v$). The voltage difference is provided to the virtual admittance unit 24 as the voltage input $\underline{v}_{in}$. The virtual admittance unit 24 may be adapted to process input signal in Laplace domain. The virtual admittance unit 24 may be configured to receive said voltage input in Laplace domain or transform said voltage input to Laplace domain. After being transformed into the Laplace domain, i.e., $\underline{v}_{in}(s)$, the virtual admittance $\underline{Y}_v(s)$ is multiplied with the voltage input $\underline{v}_{in}(s)$ to provide said current reference $\underline{i}_{f,ref}(s)$ in Laplace domain. The virtual admittance $\underline{Y}_v(s)$ may be obtained at least partly e.g., by means of frequency domain measurement, which may include at least one measurement at a discrete frequency ($s = j\omega$) using $\underline{Y}_v(j\omega) = \underline{I}_f(j\omega) / \underline{V}_f(j\omega)$, wherein $\underline{V}_f(j\omega)$ and $\underline{I}_f(j\omega)$ are measured AC voltage and current phasors at various frequencies at steady-state. Once the virtual admittance $\underline{Y}_v(s)$ is known, it may together with the voltage input $\underline{v}_{in}$ yield the current reference $\underline{i}_{f,ref}(s)$. Inverse Laplace transforming yields the current reference in time domain.

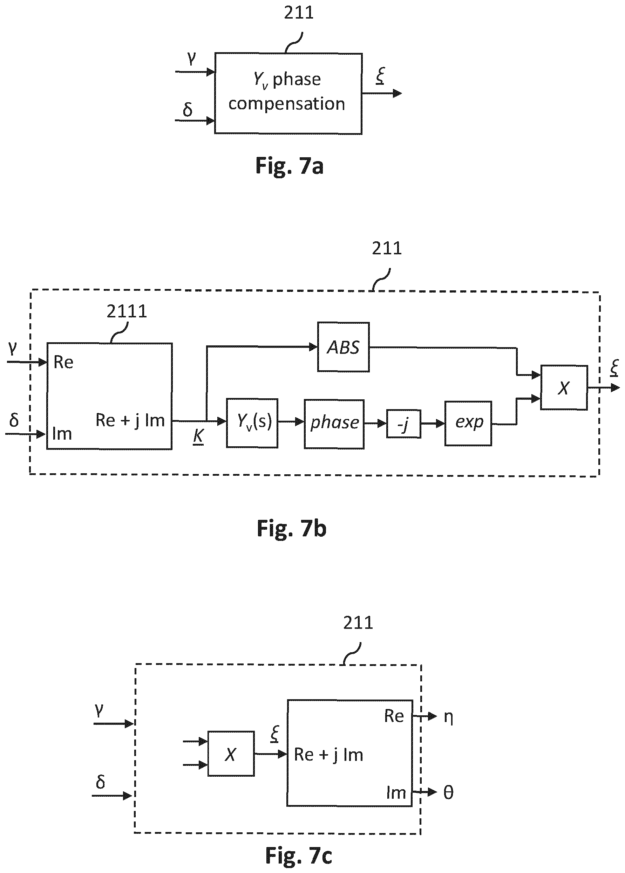

As also illustrated in Figs. 3a-3b, the control device 20 comprises a phase compensation unit 211. The phase compensation unit 211 is configured to apply a phase compensation to the first complex signal K; $\gamma$, $\delta$, which phase compensation is selected to compensate for a phase-shift introduced by the virtual impedance. Thereby, a cross-coupling between active power and reactive power may be reduced. The phase compensation unit 211 may be logically adapted in various ways, wherein one non-limiting example is detailed in a later section in reference to Figs. 7a-7c.

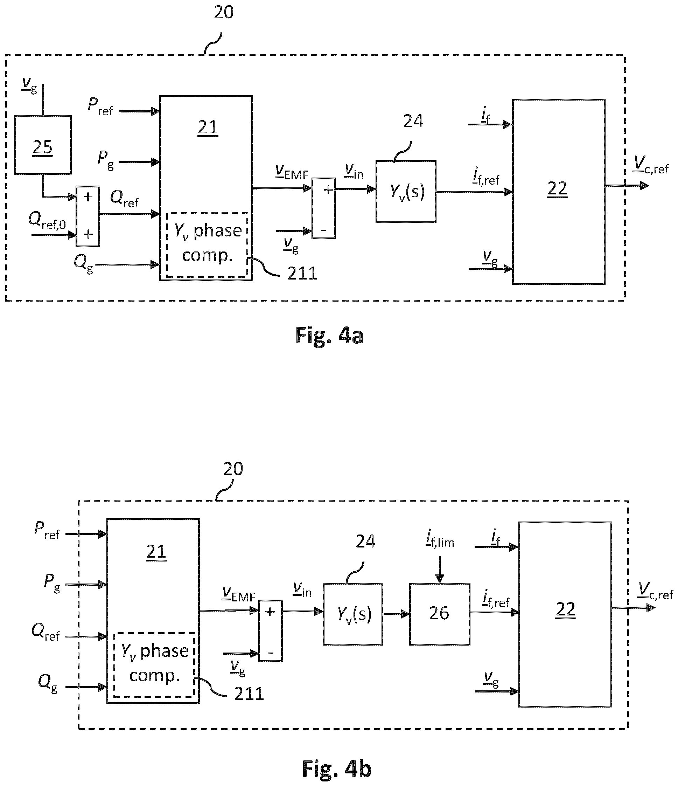

Fig. 4a schematically illustrates a control device 20 according to an embodiment. The control device 20 according to Fig. 4a differs from the control device 20 illustrated in, e.g., Fig. 3b in that the reference reactive power $Q_{ref}$ is based on an initial reference reactive power $Q_{ref,0}$ and the power grid voltage $\underline{v}_g$ via a voltage controller 25. The voltage controller 25 enables reactive power feedback.

Fig. 4b schematically illustrates a control device 20 according to an embodiment. The control device 20 according to Fig. 4b differs from the control device 20 illustrated in, e.g., Fig. 3b in that the control device 20 comprises a current limiting unit 26 configured to limit the current reference $\underline{i}_{f,ref}$ based on a current limit reference $i_{f,lim}$. This advantageously facilitates current limitation of the VSC 10 without tripping functionality. Thus, protection of sensitive components of the VSC 10 may be enhanced without compromising the VSC's grid-forming capability.

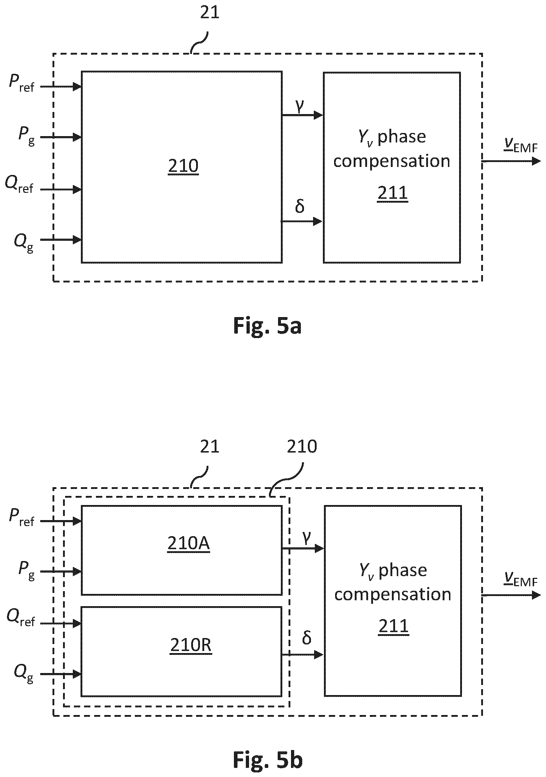

Figs. 5a-5b schematically illustrate the decoupling controller 21 of the control device 20 according to some embodiments. The decoupling controller 21 comprises a decoupling sub-unit 210 configured to determine a real part $\gamma$ and an imaginary part $\delta$ of the first complex signal K (not shown in Figs. 5a-5b, see Fig. 7b). The real part and the imaginary part are then provided to the phase compensation unit 211. The decoupling sub-unit 210 may comprise an active power loop 210A configured to determine the real part $\gamma$ and a reactive power loop 210R configured to determine the imaginary part $\delta$. Separate power loops 210A, 210R may advantageously facilitate individual control of active power and reactive power. Further, the decoupling sub-unit 210 may be configured to process the power and power reference as complex parameters. The active power loop and the reactive power loop may process the real part $\gamma$ and the imaginary part $\delta$ separately as scalars.

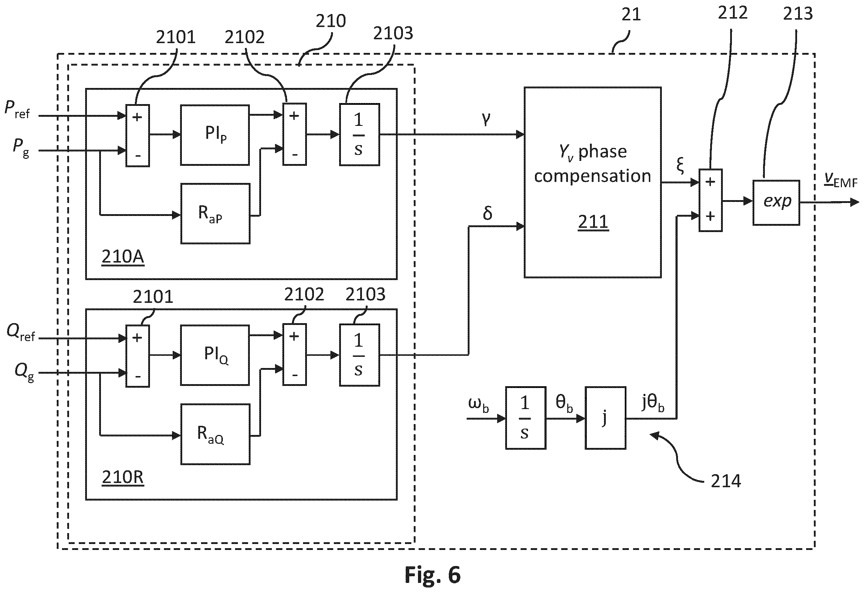

Fig. 6 schematically illustrates a portion of the control device 20 according to an embodiment. The control device 20 comprises the aforementioned active power loop 210A and the reactive power loop 210R. The active power loop 210A comprises a PI controller $PI_P$ and a proportional unit $R_{aP}$ for providing a parallel active damping with coefficient $R_{aP}$. The input to the PI controller $PI_P$ is the active power error provided by a first subtractor 2101 which receives active power reference $P_{ref}$ as positive input and active grid power $P_g$ as negative input. The input to the active damping is the active grid power $P_g$. The output of the PI-controller $PI_P$ and the output of the proportional unit $R_{aP}$ are provided to a second subtractor 2102. The output of the second subtractor 2102 is provided to a Laplace transforming unit 2103. The Laplace transforming unit 2103 outputs the real part $\gamma$ of the first complex signal K. However, the Laplace transforming unit 2103 may be implemented in-between the decoupling sub-unit 210 and the phase compensation unit 211 or in the phase compensation unit 211.

The reactive power loop 210R comprises a PI controller $PI_Q$ and a proportional unit $R_{aQ}$ for providing a parallel active damping with coefficient $R_{aQ}$. The input to the PI controller $PI_Q$ is the reactive power error provided by a first subtractor 2101 which receives reactive power reference Qref as positive input and reactive grid power $Q_g$ as negative input. The input to the active damping is the reactive grid power $Q_g$. The output of the PI-controller $PI_Q$ and the output of the proportional unit $R_{aQ}$ are provided to a second subtractor 2102. The output of the second subtractor 2102 of the reactive power loop 210R is provided to a Laplace transforming unit 2103. The Laplace transforming unit 2103 outputs the imaginary part $\delta$ of the first complex signal K. However, the Laplace transforming unit 2103 may be implemented in-between the decoupling sub-unit 210 and the phase compensation unit 211 or in the phase compensation unit 211.

The real part $\gamma$ and the imaginary part $\delta$ of the first complex signal $\underline{K}$ are provided to the phase compensation unit 211 which is configured to apply a phase compensation to the first complex signal K, which phase compensation is selected to compensate for a phase-shift introduced by the virtual impedance $R_v$, $L_v$. The phase compensation unit 211 outputs a second complex signal $\underline{\xi}$. The VSC virtual electromotive force $\underline{v}_{EMF}$ is then determined based on the second complex signal $\underline{\xi}$.

The decoupling controller 21 may comprise a phase control loop 214 for regulating the VSC virtual electromotive force based on grid frequency. In such a case, the decoupling controller 21 may comprise an addition unit 212. The second complex signal is provided to the addition unit 212 as a first positive input and an output of the phase control loop 214 is provided as a second positive input. The phase control loop 214 may comprise a Laplace transformation unit configured to Laplace transform an input indicative of the grid frequency to a phase angle. The phase control loop 214 may further comprise an imaginary processing unit configured to output the phase angle as an imaginary parameter. In other words, the decoupling controller 21 is configured to determine said VSC virtual electromotive force (vEMF) as:

$$\underline{v}_{EMF} = e^{\eta + j\,(\theta + \theta_b)}$$

wherein $\theta_b$ is a ramp angle which increases with time, with a slope equal to a rated frequency of the power grid.

The decoupling controller 21 may comprise an exponential unit 213 configured to take the exponential of the input, which comprises the second complex signal and the phase angle, and output the result as the VSC virtual electromotive force.

Figs. 7a-7c schematically illustrate a phase compensation unit 211 of the control device according to some embodiments. In Fig. 7a, the real part $\gamma$ and the imaginary part $\delta$ of the first complex signal K are provided to the phase compensation unit 211 which is configured to apply a phase compensation to the first complex signal K, which phase compensation is selected to compensate for a phase-shift introduced by the virtual impedance $R_v$, $L_v$. The phase compensation unit 211 outputs a second complex signal f

In Fig. 7b, an example embodiment of the phase compensation unit 211 is provided. The real part $\gamma$ and the imaginary part $\delta$ of the first complex signal K is provided to the phase compensation unit 211, and consequently provides the first complex signal $\underline{K}$ directly via a complex generating unit 2111. The phase compensation unit 211 comprises a virtual admittance unit $Y_v$ configured to provide a dynamic phase-shift using a frequency-dependent transfer function of the virtual admittance:

$$Y_v(s) = \frac{1}{sL_v + j\omega L_v + R_v}.$$

The phase of the result from the virtual admittance unit $Y_v$ is then determined, and the second complex signal $\underline{\xi}$ is determined based on a magnitude of the first complex signal K (provided via a magnitude unit ABS) and said phase. The phase compensation unit 211 may determine said second complex signal $\underline{\xi}$ as a complex parameter, or in terms of its real part $\eta$ and its imaginary part $\theta$ (i.e., as scalars), see Fig. 7c.

The control device 20 according to the present disclosure provides a reduction of cross-coupling between active and reactive power. This can be seen as follows. Based on the Thevenin models of Figs. 2a-2c, the active power can be written as

$$P_g = \frac{V_g\left(R_v V_{EMF}\cos\theta - R_v V_g + V_{EMF}X_v\sin\theta\right)}{R_v^2 + X_v^2}$$

and the reactive power can be written as

$$Q_g = -\frac{V_g\left(-X_v V_{EMF}\cos\theta + X_v V_g + V_{EMF}R_v\sin\theta\right)}{R_v^2 + X_v^2}$$

wherein $V_g$ is the power grid voltage during steady state operation, $R_v$ is the virtual resistance of the virtual impedance, $V_{EMF}$ is the VSC electromotive force, $X_v$ is the virtual reactance of the virtual impedance (equal to the angular frequency times the virtual inductance $L_v$).

For small $\theta$, $\cos\theta$ and $\sin\theta$ may be approximated using Taylor series expansion as 1 and $\theta$, respectively. Thus, for such small $\theta$, it can be seen that for the active power and the reactive power as defined above, there is a cross-coupling between active power and reactive power since both equations depend on the phase angle $\theta$. However, this cross-coupling can be reduced, preferably eliminated, by adjusting the virtual impedance. The control device according to the present disclosure advantageously provides said virtual impedance to be selected appropriately in a facilitated manner using the aforementioned phase compensation unit.

Assuming a purely reactive virtual impedance, i.e., $R_v = 0$, the equations for active power and reactive power can be written as

$$P_g = \frac{V_g\, V_{EMF}\sin\theta}{X_v}$$

and

$$Q_g = -\frac{V_g\left(-V_{EMF}\cos\theta + V_g\right)}{X_v}.$$

Likewise, assuming a purely resistive virtual impedance, i.e., $X_v = 0$, the equations for active power and reactive power can be written as

$$P_g = \frac{V_g\left(V_{EMF}\cos\theta - V_g\right)}{R_v}$$

and

$$Q_g = -\frac{V_g\, V_{EMF}\sin\theta}{R_v}.$$

The control device 20 according to the disclosure reduces the cross-coupling between active and reactive power by means of the phase compensation unit. The control device may be tuned to enhance this achievement by using a loop-sharing technique. Denoting with

$$Z_v = \sqrt{R_v^2 + X_v^2}$$

and considering a loop-shaping of the closed-loop transfer function as a 1st order low-pass filter of loop-bandwidth $\alpha_P$ and $\alpha_Q$ for the active power loop 210A and the reactive power loop 210R, respectively, the following control parameters can be found.

For the active power loop: $K_{p,P} = \alpha_P Z_v$; $R_{aP} = K_{p,P}$; $K_{i,P} = \alpha_P^2 Z_v$.

For the reactive power loop: $K_{p,Q} = \alpha_Q Z_v$; $R_{aQ} = K_{p,Q}$; $K_{i,Q} = \alpha_Q^2 Z_v$.

Here, $K_{p,P}$ denotes the proportional gain of the PI-controller $PI_P$ for active power loop 210A, $K_{i,P}$ denotes the integral gain of the PI-controller $PI_P$ for active power loop 210A, $K_{p,Q}$ denotes the proportional gain of the PI-controller $PI_Q$ for the reactive power loop 210R, and $K_{i,Q}$ denotes the integral gain of the PI-controller $PI_Q$ for the reactive power loop 210R. With the selected control parameters and neglecting the dynamics in the virtual admittance's reactor, the closed-loop response is given by

$$\begin{bmatrix} P_g \\ Q_g \end{bmatrix} = \begin{bmatrix} \dfrac{\alpha_P}{s + \alpha_P} & 0 \\ 0 & \dfrac{\alpha_Q}{s + \alpha_Q} \end{bmatrix} \begin{bmatrix} P_{ref} \\ Q_{ref} \end{bmatrix}$$

Note that the closed-loop response corresponds to a 1st order low-pass filter with then desired loop bandwidth. Furthermore, thanks to the implemented phase-compensation algorithm, the response of active and reactive powers are perfectly decoupled.

If a loop-technique leading to a 2nd order low-pass filter is desired (thus allowing an overshoot in the closed-loop step response, for example to allow more freedom in the selection of the damping term), denoting with $\varsigma$ the closed-loop damping term, the following control parameters can be found.

For the active power loop: $K_{p,P} = \alpha_P Z_v$; $R_{a,P} = \alpha_P Z_v(2\varsigma\text{-}1)$; $K_{i,P} = \alpha_P^2 Z_v$.

For the reactive power loop: $K_{p,Q} = \alpha_Q Z_v$; $R_{a,Q} = \alpha_Q Z_v(2\varsigma\text{-}1)$; $K_{i,Q} = \alpha_Q^2 Z_v$.

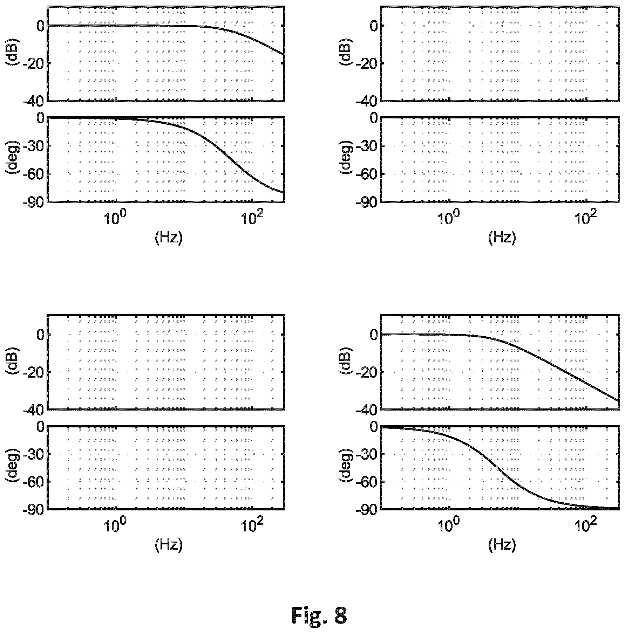

For the 1st order loop-shaping technique, the frequency response of the closed loop system for $\alpha_P = \alpha_Q = 5\cdot 2\pi$ rad/s is provided in Fig. 8, which illustrates various bode diagrams of a control device according to an embodiment. More specifically, four pairs of bode diagrams are illustrated, each pair comprising a top pane illustrating the behavior of the complex transfer function in terms of magnitude (in dB) with regards to frequency (Hz) and a bottom pane illustrating the behavior of the complex transfer function in terms of phase (in deg) with regards to frequency (Hz). The top left pair relates to how an active power reference impacts active power. The top right pair relates to how an active power reference impacts reactive power. The bottom left pair relates to how a reactive power reference impacts active power. The bottom right pair relates to how a reactive power reference impacts reactive power. In generating these plots, the virtual reactor dynamics was neglected. As can be seen, the control device exhibits an attenuating effect on higher-frequency components of the active power reference signal as they propagate to the actual power output, and on higher-frequency components of the reactive power reference signal as they propagate to the reactive power output. Moreover, the top right illustrates that the active power reference signal does not impact reactive power. Likewise, the bottom left illustrates that the reactive power reference signal does not impact active power.

The dq input admittance of the implemented control device is given by

$$\begin{bmatrix} i_f^d \\ i_f^q \end{bmatrix} = \begin{bmatrix} \dfrac{R_v}{R_v{}^2 + X_v{}^2} \dfrac{s^2}{(s + \alpha_P)^2} & \dfrac{X_v}{R_v{}^2 + X_v{}^2} \dfrac{s^2}{(s + \alpha_P)^2} \\ -\dfrac{X_v}{R_v{}^2 + X_v{}^2} \dfrac{s^2}{(s + \alpha_Q)^2} & \dfrac{R_v}{R_v{}^2 + X_v{}^2} \dfrac{s^2}{(s + \alpha_Q)^2} \end{bmatrix} \begin{bmatrix} v_g^d \\ v_g^q \end{bmatrix}$$

For $\alpha_P = \alpha_Q = \alpha$, the input admittance can be written in complex form as:

$$\underline{i}_f^{(dq)} = \dfrac{R_v - jX_v}{R_v{}^2 + X_v{}^2} \dfrac{s^2}{(s + \alpha)^2} \underline{v}_g^{(dq)}$$

The equation above reveals the complex nature of the implemented control device. The input admittance is constituted by the virtual admittance in cascade with a 2nd order high-pass filter having frequency $\alpha$. As desired, at very low frequencies, i.e., close to the fundamental frequency, the control device will reject voltage disturbances in the output power. As frequency increases, the input admittance will approach the virtual admittance, depending on the selected control device's speed of response.

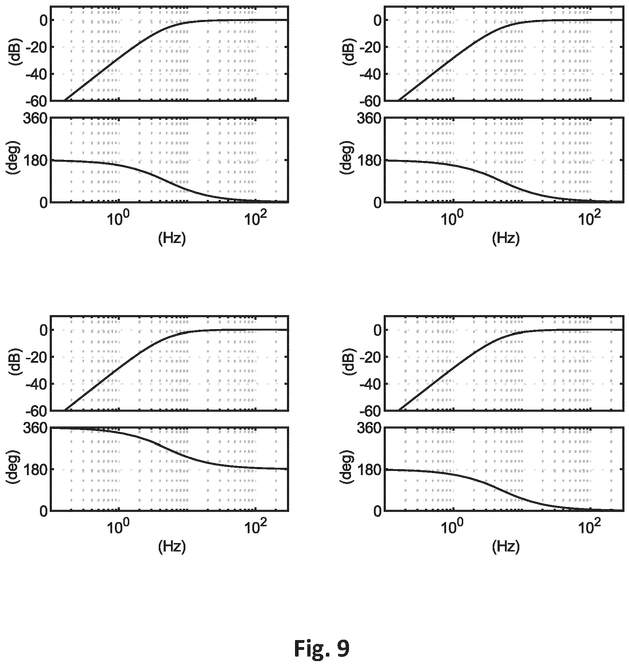

Fig. 9 illustrates various bode diagrams of a VSC input admittance components according to an embodiment. More specifically, four pairs of bode diagrams are illustrated, each pair comprising a top pane illustrating the behavior of the VSC voltage in terms of magnitude (in dB) with regards to frequency (Hz) and a bottom pane illustrating the behavior of the VSC voltage in terms of phase (in deg) with regards to frequency (Hz). Top-left: transfer function from $v_{gd}$ to $i_{gd}$ ($Y_{dd}$); Top-right: transfer function from $v_{gq}$ to $i_{gd}$ ($Y_{qd}$); Bottom-left: transfer function from $v_{gq}$ to $i_{gd}$ ($Y_{dq}$); Bottom-right: transfer function from $v_{gq}$ to $i_{gq}$ ($Y_{qq}$). Virtual reactor dynamics neglected. $v_g$ represents the grid voltage, and $v_{gd}$ and $v_{gq}$ indicate the respective components of the grid voltage in dq-coordinate system (d or q). $i_g$ represents the grid current, and $i_{gd}$ and $i_{gq}$ indicate the respective components of the grid current in dq-coordinate system (d or q).

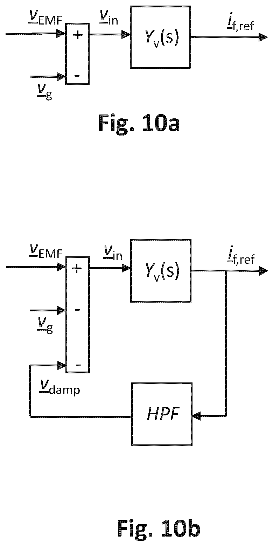

Figs. 10a-10b schematically illustrate a portion of the control device 20 according to embodiments. The control device 20 may comprise an active damping unit implementing a high-pass filter (e.g., in dq-coordinate system), which takes as input the current reference and outputs a filtered signal which is received as a negative input to the subtracting unit. The active damping unit may reduce the offset gain and allow for independent selection of the value of the virtual resistance. The damping voltage $v_{damp}$ may be calculated as

$$v_{\mathrm{damp}} = v'_{\mathrm{damp}}\, e^{j\,(\theta+\theta_b)}$$

and said $v'_{\mathrm{damp}}$ is calculated as

$$v'_{\mathrm{damp}} = K_D\, \frac{s}{s + \alpha_{HP}}\, i_{\mathrm{f,ref}} e^{-j\,(\theta+\theta_b)}$$

wherein $K_D$ is a gain during steady state operation and $\alpha_{HP}$ is the cutoff frequency of the high-pass filter.

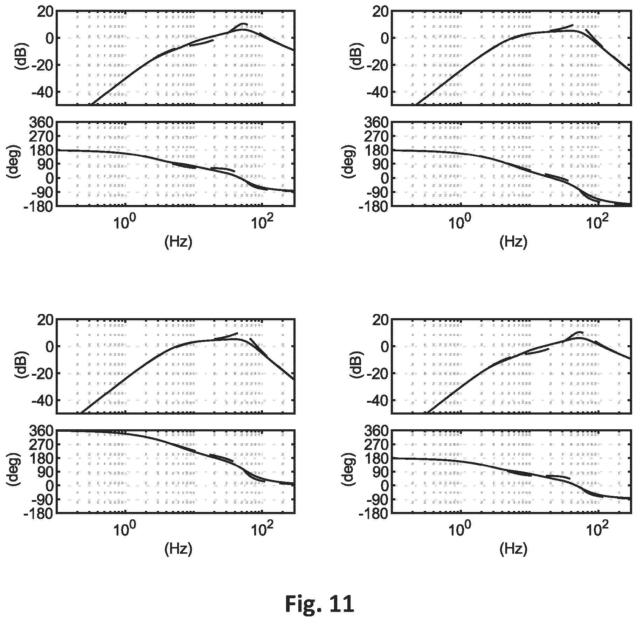

Fig. 11 illustrates bode diagrams depicting VSC's virtual admittance with and without additional active damping. Virtual reactor dynamics is included. Control parameters are selected as $R_v$ = 0.25pu, $X_v$ = 0.5pu. Top-left illustrates magnitude and phase of transfer function from $v_{gd}$ to $i_{gd}$ ($Y_{dd}$). Top-right illustrates magnitude and phase transfer function from $v_{gq}$ to $i_{gd}$ ($Y_{qd}$). Bottom-left illustrates magnitude and phase of transfer function from $v_{gq}$ to $i_{gd}$ ($Y_{dq}$). Bottom-right illustrates magnitude and phase of transfer function from $v_{gq}$ to $i_{gq}$ ($Y_{qq}$). For each of the above, dashed line represents additional active damping unit being inactive. For each of the above, solid line represents additional active damping unit being active. Units for all plots; x axis: "frequency [Hz]"; y axis: top plot is "magnitude [dB]", bottom plot is "phase [deg]. As can be seen by comparison between solid line and dashed line, the active damping unit reduces an offset. Due to the incorporation of the offset active damping, a non-zero cross-coupling between active power and reactive power may be introduced. This cross-coupling depends on the selected parameters for the offset active damping. The resulting cross-coupling gain is very small and does not exceed -30 dB.

The present disclosure also relates to a power supporting system 1 comprising the voltage source converter, VSC, 10, and a control device 20 according to any one of the aforementioned embodiments, which power supporting system 1 is schematically illustrated in Figs. 1a-1c.

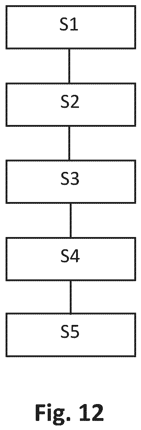

Fig. 12 illustrates a flow chart of a method of grid-forming control using a VSC according to an embodiment. The method comprises a step of determining S1 a VSC virtual electromotive force $v_{EMF}$ of said VSC 10 based at least on a first complex signal K; $\gamma$, $\delta$. The first complex signal K; $\gamma$, $\delta$ is based at least on: a complex power $S_g$, $P_g$, $Q_g$ being exchanged between said VSC 10 and the power grid 40, and a complex power reference $S_{ref}$, $P_{ref}$, $Q_{ref}$ for said complex power $S_g$, $P_g$, $Q_g$. The method comprises a step of determining S2 a VSC voltage reference $v_{c,ref}$ for said VSC 10 based at least on: a grid voltage $v_g$ for said power grid 40 at said PCC, a current if propagating between said VSC 10 and said PCC, and a current reference $i_{f,ref}$ for said current if. The method comprises a step of determining S3 said current reference $i_{f,ref}$ based at least on: a voltage input $v_{in}$ multiplied with a virtual admittance $Y_v$. Said voltage input $v_{in}$ is based at least on a voltage difference between said VSC virtual electromotive force $v_{EMF}$ and said grid voltage $v_g$. Said virtual admittance $Y_v$ is based at least on a virtual impedance between the VSC virtual electromotive force $v_{EMF}$ and said PCC. The method comprises a step of applying S4 a phase compensation to said first complex signal K; $\gamma$, $\delta$, which phase compensation is selected to compensate for a phase-shift introduced by said virtual impedance. The method comprises a step of providing S5 said VSC voltage reference $v_{c,ref}$ to said VSC 10.

While the foregoing is directed to embodiments of the disclosure, other and further embodiments may be devised without parting from the inventive concept discussed herein. The scope of the invention is however determined by the claims.

## Claims

1.  A control device (20) configured for grid-forming control using a voltage source converter, VSC, (10) electrically connected to a power grid (40) via a point-of-common-coupling, PCC, the control device (20) comprising:

    a decoupling controller (21) configured to determine a VSC virtual electromotive force ($\underline{v}_{EMF}$) of said VSC (10) based at least on a first complex signal ($\underline{K}$; $\gamma$, $\delta$), which first complex signal (K; $\gamma$, $\delta$) is based at least on a complex power ($\underline{S}_g$; $P_g$, $Q_g$) being exchanged between said VSC (10) and the power grid (40), and a complex power reference ($\underline{S}_{ref}$; $P_{ref}$, Qref) for said complex power ($\underline{S}_g$; $P_g$, $Q_g$), and
    a current controller (22) configured to determine a VSC voltage reference ($\underline{v}_{c,ref}$) for said VSC (10) based at least on a grid voltage ($\underline{v}_g$) for said power grid (40) at said PCC, and a current reference ($\underline{i}_{f,ref}$) for a current ($\underline{i}_f$) propagating between said VSC (10) and said PCC,

a virtual admittance unit (24) configured to determine said current reference ($i_{f,ref}$) based at least on a voltage input ($\underline{v}_{in}$) multiplied with a virtual admittance ($Y_v$), wherein said voltage input ($\underline{v}_{in}$) is based at least on a voltage difference between said VSC virtual electromotive force ($\underline{v}_{EMF}$) and said grid voltage ($\underline{v}_g$), and said virtual admittance ($Y_v$) is based at least on a virtual impedance ($R_v$, $L_v$) between the VSC virtual electromotive force ($\underline{v}_{EMF}$) and said PCC,

wherein the control device (20) is configured to provide said VSC voltage reference ($\underline{v}_{c,ref}$) to said VSC (10), and wherein said decoupling controller (21) comprises a phase compensation unit (211) configured to apply a phase compensation to said first complex signal ($\underline{K}$; $\gamma$, $\delta$), which phase compensation is selected to compensate for a phase-shift introduced by said virtual impedance ($R_v$, $L_v$).

2. The control device (20) according to claim 1, wherein the decoupling controller (21) comprises an active power loop (210A) configured to determine a real part ($\delta$) of the first complex signal ($\underline{K}$) and a reactive power loop (210R) configured to determine an imaginary part ($\gamma$) of the first complex signal ($\underline{K}$).

3. The control device (20) according to any of claims 1-2, wherein said phase compensation unit (211) is configured to:

receive the first complex signal ($\underline{K}$; y, $\delta$);
apply said phase compensation to said first complex signal ($\underline{K}$; y, $\delta$), and
determine a second complex signal (f; $\eta$, $\theta$) based at least on said phase compensation and said first complex signal ($\underline{K}$; y, $\delta$), wherein the VSC voltage reference ($\underline{v}_{c,ref}$) is at least based on said second complex signal ($\underline{\xi}$; $\eta$, $\theta$).

4. The control device (20) according to claim 3, wherein the decoupling controller (21) is configured to determine said VSC virtual electromotive force ($\underline{v}_{EMF}$) as:

$$\underline{\mathrm{V}}_{EMF} = e^{\eta + j\,(\theta + \theta_b)}$$

wherein $\theta_b$ is a ramp angle which increases with time, with a slope equal to a rated frequency of the power grid, $\eta$ is the real part of the second complex signal (f; $\eta$, $\theta$), and $\theta$ is the imaginary part of the second complex signal ($\underline{\xi}$; $\eta$, $\theta$).

5. The control device (20) according to any of claims 1-4, wherein said phase compensation comprises applying a dynamic phase-shift using a frequency-dependent transfer function of said virtual admittance ($R_v$, $L_v$):

$$Y_v(s) = \frac{1}{sL_v + j\omega L_v + R_v}$$

wherein $L_v$ denotes the inductive part of the virtual admittance ($R_v$, $L_v$) and $R_v$ denotes the resistive part of the virtual admittance ($R_v$, $L_v$).

6. The control device (20) according to any preceding claims, wherein said voltage input ($\underline{v}_{in}$) is further based on subtracting a damping voltage ($v_{damp}$) from said voltage difference ($v_{diff}$), wherein said damping voltage ($v_{damp}$) is provided based on a feedback of the current reference ($i_{f,ref}$) passed through a high-pass filter.

7. The control device (20) according to claim 6, wherein said damping voltage ($v_{damp}$) is calculated as

$$v_{damp} = v'_{damp}\, e^{j\,(\theta + \theta_b)}$$

and said $v'_{damp}$ is calculated as

$$v'_{damp} = K_D \frac{s}{s + \alpha_{HP}} i_{f,ref} e^{-j\,(\theta + \theta_b)}$$

wherein $K_D$ is a gain during steady state operation and $\alpha_{HP}$ is the cutoff frequency of the high-pass filter.

8. The control device (20) according to any preceding claims, comprising a current limiting unit (26) configured to apply a current limitation to prevent the VSC (10) from being operated above a maximum allowed current threshold (if,lim).

9. The control device (20) according to any of the preceding claims, wherein the current controller is configurable between an active mode and a passive mode,
wherein

   in the active mode, the current output of the converter is controlled in closed loop, and
   in passive mode, the current output of the converter is controlled in open loop.

10. The control device (20) according to any preceding claims, configured to receive the complex power ($\underline{S}_g$; $P_g$, $Q_g$) and/or the complex power reference ($\underline{S}_{ref}$; $P_{ref}$, $Q_{ref}$) from a system operator or from at least one auxiliary control device.

11. The control device (20) according to any preceding claims, wherein the virtual impedance ($R_v$, $L_v$) comprises a virtual input impedance ($R_{v1}$, $L_{v1}$) of the VSC (10) in series with a filter impedance (Rf, Lf) of a filter reactor (30) connected between the VSC (10) and the PCC.

12. The control device (20) according to any preceding claims, wherein

   the control device (20) is configured to process said complex power ($\underline{S}_g$; $P_g$, $Q_g$) and/or said complex power reference ($\underline{S}_{ref}$; $P_{ref}$, $Q_{ref}$), or any derivatives thereof, and/or any other inputs, in scalar form or in complex form or in a mix of scalar and complex forms, and/or
   the control device 20 is configured to be implemented in scalar form or in a complex form or in a mix of scalar and complex form.

13. The control device (20) according to any preceding claims, configured to process at least one parameter in a fixed $\alpha\beta$-coordinate system and/or process at least one parameter in a rotating dq-coordinate system.

14. Power supporting system (1) comprising:

   a voltage source converter, VSC, (10) configured to be electrically connectable to a power grid (40) at a point-of-common-coupling, PCC, and
   a control device (20) according to any of the preceding claims.

15. Method of grid-forming control using a voltage source converter, VSC, (10) electrically connected to a power grid (40) via a point-of-common-coupling, PCC, the method comprising:

   determining (S1) a VSC virtual electromotive force ($\underline{v}_{EMF}$) of said VSC (10) based at least on a first complex signal ($\underline{K}$; $\gamma$, $\delta$), which first complex signal ($\underline{K}$; $\gamma$, $\delta$) is based at least on a complex power ($\underline{S}_g$; $P_g$, $Q_g$) being exchanged between said VSC (10) and the power grid (40), and a complex power reference ($\underline{S}_{ref}$; $P_{ref}$, $Q_{ref}$) for said complex power ($\underline{S}_g$; $P_g$, $Q_g$);
   determining (S2) a VSC voltage reference ($\underline{v}_{c,ref}$) for said VSC (10) based at least on a grid voltage ($\underline{v}_g$) for said power grid (40) at said PCC, and a current reference ($\underline{i}_{f,ref}$) for a current ($\underline{i}_f$) propagating between said VSC (10) and said PCC;
   determining (S3) said current reference ($\underline{i}_{f,ref}$) based at least on a voltage input ($\underline{v}_{in}$) multiplied with a virtual admittance ($Y_v$), wherein said voltage input ($\underline{v}_{in}$) is based at least on a voltage difference between said VSC virtual electromotive force ($\underline{v}_{EMF}$) and said grid voltage ($\underline{v}_g$), and said virtual admittance ($Y_v$) is based at least on a virtual impedance ($R_v$, $L_v$) between the VSC virtual electromotive force ($\underline{v}_{EMF}$) and said PCC;
   applying (S4) a phase compensation to said first complex signal ($\underline{K}$; y, $\delta$), which phase compensation is selected to compensate for a phase-shift introduced by said virtual impedance ($R_v$, $L_v$), and
   providing (S5) said VSC voltage reference ($\underline{v}_{c,ref}$) to said VSC (10).

**Fig. 1a**

**Fig. 1b**

**Fig. 1c**

**Fig. 1d**

**Fig. 1e**

**Fig. 2a**

**Fig. 2b**

**Fig. 2c**

**Fig. 3a**

**Fig. 3b**

**Fig. 4a**

**Fig. 4b**

**Fig. 5a**

**Fig. 5b**

**Fig. 6**

EP 4 765 549 A1

211

$\gamma$ → | $Y_v$ phase compensation | → $\underline{\xi}$

$\delta$ →

**Fig. 7a**

211

2111

$\gamma$ → Re | | ABS | | $\underline{\xi}$

$\delta$ → Im | Re + j Im | → $\underline{K}$ → | $Y_v(s)$ | → | phase | → | -j | → | exp | → X →

**Fig. 7b**

211

$\gamma$ →

→ | X | → $\underline{\xi}$ | Re + j Im | Re | → $\eta$

$\delta$ → | | Im | → $\theta$

**Fig. 7c**

Fig. 8

**Fig. 9**

$\underline{v}_{EMF}$  $\underline{v}_{in}$  $Y_v(s)$  $\underline{i}_{f,ref}$

$+$  $-$

$\underline{v}_g$

## Fig. 10a

$\underline{v}_{EMF}$  $\underline{v}_{in}$  $Y_v(s)$  $\underline{i}_{f,ref}$

$+$  $-$  $-$

$\underline{v}_g$

$\underline{v}_{damp}$

HPF

## Fig. 10b

Fig. 11

Fig. 12

Europäisches
Patentamt
European
Patent Office
Office européen
des brevets

# EUROPEAN SEARCH REPORT

**Application Number**

EP 24 22 1078

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ROSSO ROBERTO ET AL: "Current Limitation Strategy For Grid-Forming Converters Under Symmetrical And Asymmetrical Grid Faults", 2020 IEEE ENERGY CONVERSION CONGRESS AND EXPOSITION (ECCE), IEEE, 11 October 2020 (2020-10-11), pages 3746-3753, XP033851311, DOI: 10.1109/ECCE44975.2020.9236314 [retrieved on 2020-10-21] | 1-3,5,8, 10-15 | INV. H02J3/38 H02J3/48 H02J3/50 H02J3/18 |
| A | * abstract * <br> * figures 1,2 * <br> * page 3749 * | 4,6,7,9 | |
| A | TARRASO ANDRES ET AL: "Virtual Admittance PLL Structure for Grid-forming Power Converters in Microgrids", 2020 IEEE ENERGY CONVERSION CONGRESS AND EXPOSITION (ECCE), IEEE, 11 October 2020 (2020-10-11), pages 5007-5011, XP033850593, DOI: 10.1109/ECCE44975.2020.9235629 [retrieved on 2020-10-21] <br> * abstract * <br> * figures 1,2 * <br> * page 5008, last paragraph - page 5009 * | 1-15 | |

**TECHNICAL FIELDS SEARCHED (IPC)**

H02J

The present search report has been drawn up for all claims

| Place of search | Date of completion of the search | Examiner |
|---|---|---|
| Munich | 1 July 2025 | Zettler, Karl-Rudolf |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
......................................................................................
& : member of the same patent family, corresponding
   document

EPO FORM 1503 03.82 (P04C01)